# EUROPÄISCHE PATENTSCHRIFT

(11) **EP 2 657 066 B1**
(45) Veröffentlichungstag und Bekanntmachung des Hinweises auf die Patenterteilung: **24.02.2016**
(21) Anmeldenummer: 13165071.5
(22) Anmeldetag: 24.04.2013
(51) Int. Cl.: B60M 1/30

(54) **Abstandshalter für ein Stromschienensystem**
Distancer for an electric rail system
Pièce intercalaire pour un système de barres conductrices

(30) Priorität: 27.04.2012 DE 202012101576 U
(43) Veröffentlichungstag der Anmeldung: 30.10.2013
(73) Patentinhaber: REHAU AG + Co, 95111 Rehau (DE)
(72) Erfinder: Meinel, Udo, 95111 Rehau (DE)

(56) Entgegenhaltungen:
- DE-A1- 1 440 685
- DE-U- 7 016 606
- DE-U- 7 018 332
- DE-U1-202009 017 145
- DE-U1-202009 017 147

## Beschreibung

Die Erfindung betrifft ein Stromschienensystem umfassend wenigstens eine, eine Stromabnahmefläche aufweisende, Stromschiene, wenigstens ein Abdeckelement, sowie wenigstens ein Abstandshalter, wobei der Abstandshalter durch wenigstens zwei über eine Traverse verbundene Trägerelemente gebildet ist, wobei der Abstandshalter wenigstens ein Rastelement welches mit einem Klemmelement des Abdeckelementes, diese verbindend, in Wirkverbindung steht.

Derartige Abstandshalter für Stromschienensysteme sind im Stand der Technik bisher ausführlich beschrieben.

So beschreibt beispielsweise die DE 7018332 einen Abstandshalter für ein Stromschienensystem. Dieser Abstandshalter ist als winkelförmiger Hohlkörper ausgebildet, mittels angeformter Nasen durch eine Drehung auf der Stromschiene selbstschließender Riegel ausgestaltet, auf die eine die Verriegelung fixierende Abdeckhaube aus Kunststoff sowie eine seitliche Abdeckplatte aus Kunststoff aufgerastet sind. Dabei soll die Abdeckhaube mittels angeformter Klemmansätze auf den an den Riegeln angeformte Nasen aufgerastet sein.
Die Abstandshalter für ein Stromschienensystem sind dabei als im bekannten Blasformverfahren hergestellte Hohlkörper ausgebildet.

Weiterhin ist in der DE 7016606 eine Stromschienenabdeckung beschrieben. Diese Stromschienenabdeckung für Stromschienen mit oberer Stromabnahmefläche weist als Abstandshalter S-förmige selbstschließende Riegel aus Kunststoff auf, die den unteren Teil der hantelförmigen Stromschiene im verriegelten Zustand übergreifende Nasen tragen und deren parallele und im verriegelten Zustand parallel zur Stromschiene verlaufende Seiten mit Klemmnasen versehen sind, auf die seitliche Abdeckplatten aus Kunststoff mittels angeformter Klemmansätze aufgeklemmt sind. Dabei sind die Riegel als einstückige Hohlkörper ausgestaltet.

Nachteilig bei diesem Stromschienensystem wird gesehen, dass die Stromschiene den Witterungseinflüssen komplett ausgesetzt ist und so insbesondere durch Niederschläge einer erhöhten Beanspruchung insbesondere durch Korrosion ausgesetzt ist.

Diese Abstandshalter für ein Stromschienensystem haben sich bereits über viele Jahre bewährt und weisen gegenüber den bisher aus Holz und anderen korrosionsanfälligen Werkstoffen hergestellten Abdecksystemen viele Vorteile auf.

Im Rahmen der Entwicklung sind jedoch die Anforderungen an die Festigkeit dieser Abstandshalter gestiegen, wobei gleichzeitig insbesondere die erforderlichen Montagezeiten und die Herstellungskosten reduziert werden müssen.
Die Abstandshalter für moderne Stromschienensysteme müssen so hergestellt bzw. konstruiert sein, dass sie multifunktional einsetzbar sind, dass die Montage zu allen Jahreszeiten einfach, schnell und ohne Verwechslungen realisierbar ist, dass die montierten Stromschienensysteme den langjährigen Belastungen standhalten und jederzeit schnell sowie reversibel reparierbar bzw. austauschbar sind. Hinzu kommt, dass die Abstandshalter möglichst aus flammwidrigem Material gefertigt sein sollen.

Insbesondere bei Stromschienensystemen mit von oben bestrichenen Stromschienen sind die Abstandshalter sowie die Abdecksysteme sehr kompliziert aufgebaut und müssen sehr aufwendig miteinander verschraubt bzw. an den jeweiligen Schienensystemen montiert werden. Dieser zusätzliche Herstellungsaufwand bzw. auch zusätzlich erforderliche Verbindungstechnik in Form von Schrauben, Winkeln, Verbindungselementen und dergleichen führt zu einem erheblich erhöhten Montageaufwand insbesondere durch die Verwendung zusätzlicher Werkzeuge bzw. verschiedener verlierbarer Materialien. Weiterhin nachteilig ist die Verwendung metallischer Verbindungselemente hinsichtlich elektrischer Isolation aber auch dem Berührungsschutz.
Ein weiterer Nachteil dieser Stromschienensysteme besteht darin, dass diese nur mit sehr hohen Kosten und personalintensiv gewartet werden können und dass bei Störungen eine aufwändige Demontage erforderlich ist.

Die DE 202009017147 U1 beschreibt einen Abstandshalter für ein Stromschienensystem umfassend wenigstens eine Stromschiene, wenigstens ein Abdeckelement sowie wenigstens einen Abstandshalter, wobei das Abdeckelement wenigstens ein Klemmelement aufweist und wobei der Abstandshalter wenigstens ein Rastelement aufweist, welches mit dem Klemmelement des Abdeckelements, diese verbindend, in Wirkverbindung steht, wobei der Abstandshalter zwei über ein Traversenelement verbundene Trägerelemente aufweist, dass an der der Stromschiene zugewandten Seite der Trägerelemente wenigstens ein Federelement angeordnet ist, welches mit seinem freien Ende das freie Ende der Stromschiene abstützend hintergreift und vom Trägerelement 8 beabstandet angeordnet ist. Das freie Ende der Stromschiene ist dabei sowohl durch den Abstandshalter als auch durch die auf dem Abstandshalter angeordneten Abdeckelemente über seine gesamte Länge vollflächig überdeckt. Es wird weiter offenbart, dass an dem freien Ende der Stromschiene gegenüberliegenden Ende die Stromabnahmefläche angeordnet ist,

Die DE 202009017145 U1 offenbart einen Abstandshalter für ein Stromschienensystem umfassend wenigstens eine (von unten nutzbare) Stromschiene, wenigstens ein Abdeckelement sowie wenigstens einen Abstandshalter, wobei das Abdeckelement wenigstens ein Klemmelement aufweist und wobei der Abstandshalter wenigstens ein Rastelement aufweist, welches mit dem Klemmelement des Abdeckelementes, diese verbindend, in Wirkverbindung steht, wobei der Abstandshalter durch zwei über eine Traverse verbundene Trägerelemente gebildet ist, wobei die Traverse wenigstens zwei miteinander kraftschlüssig und/oder stoffschlüssige verbundene Traversenelemente aufweist. Die Stromschiene weist dabei eine etwa Doppel-T-förmige Kontur auf, wobei am freien Ende der Stromschiene der Abstandshalter angeordnet ist. Der Abstandshalter ist über zwei miteinander kraftschlüssig verbundene Traversenelemente der Trägerelemente und dem dritten Klemmelement mit dem freien Ende der Stromschiene verbunden. Es wird weiter offenbart, dass das freie Ende der Stromschiene durch den Abstandshalter und die Abdeckelemente über seine gesamte Länge vollflächig abgedeckt ist. Die Stromabnahmefläche ist genau die dem freien Ende der Stromschiene gegenüberliegende Fläche.

Hier setzt die Erfindung ein, die sich die Aufgabe gestellt hat, die Nachteile des bisher bekannten Standes der Technik zu überwinden und ein Stromschienensystem aufzuzeigen, welches kostengünstig und wirtschaftlich herstellbar ist, welches schnell und unverwechselbar montierbar ist und das einen sicheren sowie störungsfreien Dauerbetrieb ermöglicht. Erfindungsgemäß wird diese Aufgabe durch die Merkmale des Anspruches 1 gelöst. Weitere Ausgestaltungen der Erfindung sind in den Unteransprüchen und Figuren ausführlich beschrieben.

Es hat sich überraschend herausgestellt, dass ein Stromschienensystem umfassend wenigstens eine, eine Stromabnahmefläche aufweisende, Stromschiene, wenigstens ein Abdeckelement, sowie wenigstens ein Abstandshalter, wobei der Abstandshalter durch wenigstens zwei über eine Traverse verbundene Trägerelemente gebildet ist, wobei der Abstandshalter wenigstens ein Rastelement aufweist, welches mit einem Klemmelement des Abdeckelementes, diese verbindend, in Wirkverbindung steht, sich dadurch auszeichnet, dass wenigstens ein Trägerelement ein die Stromabnahmefläche der Stromschiene überdeckendes von dieser beabstandet, angeordnetes freies Ende aufweist und dass das freie Ende des Trägerelementes der Stromabnahmefläche der Stromschiene gegenüberliegend angeordnet ist. Durch diese vorteilhafte Ausgestaltung ist es möglich, den Abstandshalter einfacher und schneller an der entsprechender Stromschiene zu montieren, ohne dass zusätzliche Werkzeuge erforderlich sind. Ein weiterer Vorteil wird darin gesehen, dass dafür keine zusätzlichen Befestigungselemente wie Schrauben, Bolzen, Winkel und dergleichen erforderlich sind.
Durch diese vorteilhafte Ausgestaltung des Abstandshalters ist es möglich, erfindungsgemäße Stromschienensysteme zu erstellen, bei denen der Abstandshalter leicht sowie unverwechselbar auf der Stromschiene montierbar ist und an dem die jeweiligen Abdeckelemente ebenfalls schnell und unverschiebbar montierbar sind.

Das erfindungsgemäße Stromschienensystem zeichnet sich weiterhin dadurch aus, dass der Abstand des freien Endes des Trägerelementes in etwa der Höhe der Stromschiene entspricht. Hierdurch ist es möglich, den Abstandshalter sehr kompakt zu dimensionieren, ohne dass die Funktion der Stromschiene beeinträchtigt ist.

Ein weiterer Vorteil des erfindungsgemäßen Stromschienensystems besteht darin, dass das freie Ende des Trägerelementes der Stromabnahmefläche der Stromschiene gegenüberliegend angeordnet ist. Dies führt vorteilhafterweise dazu, dass die am erfindungsgemäßen Abstandshalter montierbaren Abdeckelemente die darunterliegende Stromabnahmefläche bzw. die Stromschiene abdecken und somit einen wichtigen Berührungsschutz realisieren, sowie vor Witterungseinflüssen schützen.
In einer weiteren vorteilhaften Ausführungsform ist das erfindungsgemäße Stromschienensystem so ausgebildet, dass das Trägerelement an seiner der Stromschiene gegenüberliegenden Seite wenigstens ein zweites Klemmelement aufweist. Dieses Klemmelement stellt sicher, dass der erfindungsgemäße Abstandshalter in seiner Gesamtgeometrie schnell und einfach auf den entsprechenden Stromschienen montierbar ist.

Dabei hat es sich weiterhin als vorteilhaft herausgestellt, dass das freie Ende des Trägerelements dem zweiten Klemmelement gegenüberliegend angeordnet ist. Dies führt vorteilhafterweise dazu, dass nicht nur die Stromabnahmefläche der Stromschiene, sondern auch die die Stromschiene fixierenden zweiten Klemmelemente vor Witterungseinflüssen geschützt sind

In einer weiteren ebenfalls vorteilhaften Ausgestaltung des erfindungsgemäßen Stromschienensystems weist das freie Ende des Trägerelementes wenigstens ein erstes Trägerteil sowie ein zweites Trägerteil auf. Dabei kann insbesondere das erste Trägerteil etwa orthogonal zum zweiten Trägerteil des freien Endes des Trägerelementes angeordnet sein und führt somit bei bestimmungsgemäßem Gebrauch des Abstandshalters dazu, dass insbesondere die Stromabnahmefläche der Stromschiene durch am Abstandshalter angeordnete Abdeckelemente einen Berührungsschutz vor unberechtigten Zugriffen realisieren, aber auch vor Witterungseinflüssen schützen.

Dabei hat es sich weiterhin als vorteilhaft herausgestellt, dass das zweite Trägerteil des freien Endes des Trägerelementes etwa parallel zur Stromabnahmefläche der Stromschiene angeordnet ist. Hierdurch wird durch den Abstandshalter ein Raum zur Verfügung gestellt, in dem der Stromabnehmer direkt und problemlos auf der Stromabnahmefläche der Stromschiene angeordnet ist bzw. sich dort frei bewegen kann.

Ein weiterer Vorteil des erfindungsgemäßen Stromschienensystems besteht darin, dass der Abstandshalter durch zwei über eine Traverse verbundene Trägerelemente gebildet ist. Dabei kann die Traverse und / oder das Trägerelement und / oder das erste Trägerteil und / oder das zweite Trägerteil im Querschnitt etwa Doppel-T-förmig ausgebildet sein. Durch diese Dimensionierung kann der Abstandshalter den Anforderungen bei bestimmungsgemäßem Gebrauch an den erfindungsgemäßen Stromschienensystemen ausreichend hinsichtlich Festigkeit und Stabilität dimensioniert bzw. angepasst werden.

Dabei hat es sich auch als vorteilhaft herausgestellt, dass die Traverse und das Trägerelement einstückig miteinander verbunden sind. Dies führt zu einer wirtschaftlichen und kostengünstigen Herstellung des Abstandshalters.

Es hat sich aber auch weiterhin als vorteilhaft herausgestellt, dass die Traverse und das Trägerelement kraftschlüssig und / oder formschlüssig miteinander verbunden sind. Diese Ausgestaltungsform lässt es zu, dass insbesondere verschieden dimensionierte Stromschienen hinsichtlich ihrer Höhe bzw. hinsichtlich ihrer Breite mit standardisierten Abstandshaltern versehen werden können, wobei ggf. eine Anpassung an verschiedene Querschnitte durch bspw. Adapter möglich ist.

Das erfindungsgemäße Stromschienensystem weist weiterhin den Vorteil auf, dass das zweite Trägerteil des freien Endes des Trägerelementes in etwa parallel zur Traverse angeordnet ist. Dies erleichtert die Dimensionierung des erfindungsgemäßen Stromschienensystems und reduziert somit seine Herstellungskosten.
Vorteilhafterweise ist weiterhin beim Abstandshalter das erste Trägerteil des freien Endes in etwa rechtwinklig am Trägerelement angeordnet.

Es liegt jedoch auch im Rahmen der Erfindung, dass das erste Trägerteil des freien Endes in etwa einem spitzen Winkel am Trägerelement angeordnet ist. Hierdurch ist es vorteilhafterweise möglich, die Stromabnahmefläche der Stromschiene kompakt sowie wirkungsvoll zu überdecken und somit nach Montage der Abdeckelemente verschieden dimensionierte Stromschienen insbesondere vor Berührung, aber auch vor Witterungseinflüssen zu schützen.

Das erfindungsgemäße Stromschienensystem weist ebenfalls den Vorteil auf, dass die Trägerelemente einander in einem spitzen Winkel gegenüberliegend angeordnet sind. In dieser Dimensionierung ist es sehr einfach möglich, den Abstandshalter auf den Fuß der Stromschiene entsprechend aufzurasten, ohne zusätzliche Werkzeuge oder Verbindungselemente zu benötigen.

Es hat sich weiterhin als vorteilhaft herausgestellt, dass die Trägerelemente einander direkt gegenüberliegend angeordnet sind. In dieser vorteilhaften Ausgestaltung ist es insbesondere möglich, schmal dimensionierte Stromschienen ebenfalls werkzeuglos mit den entsprechenden Abstandshaltern zu bestücken.
Ein weiteres vorteilhaftes Merkmal des erfindungsgemäßen Stromschienensystems besteht darin, dass am freien Ende des Trägerelementes wenigstens ein Befestigungselement angeordnet ist. Dieses Befestigungselement ist so angeordnet und dimensioniert, dass am Abstandshalter angeordnete Abdeckelemente über Befestigungsmittel wie beispielsweise Schrauben bei Bedarf am Abstandshalter fixiert werden können.

Der Abstandshalter des erfindungsgemäßen Stromschienensystems stellt somit ein einfach dimensionierbares Formteil dar, welches sich beispielsweise aus polymerem Material im an sich bekannten Spritzgießverfahren oder auch aus duromerem Material im Pressverfahren bzw. im Spritzgießverfahren kostengünstig und wirtschaftlich herstellen lässt.
Unter polymerem Werkstoff sind Materialien gemeint, wie Polyvinylchlorid (PVC); Polyolefin, wie Polypropylen (PP) oder Polyethylen (PE); styrolbasiertes Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol PPY);Polytetrafluorethylen (PTFE); Polyurethan (PUR); Polyvinylalkohol (PVA); Polyvinylacetat (PVAC); Polyvinylidenchlorid (PVDC); sowie Mischungen aus wenigstens zwei dieser Materialien.
Dabei können dem polymeren Werkstoff geeignete Füll- und / oder Verstärkungsstoffe beigemischt sein, die die mechanischen Eigenschaften positiv beeinflussen insbesondere Glasfasern, Glaskugeln aber auch Füllstoffe wie Kreide, Teflon und dergleichen.

Die Erfindung betrifft außerdem ein Stromschienensystem umfassend wenigstens eine, eine Stromabnahmefläche aufweisenden, Stromschiene, wenigstens ein Abdeckelement, sowie wenigstens ein Abstandshalter nach einem der vorher beschriebenen Merkmale.

Die Erfindung soll nun an diesen nicht einschränkenden Ausführungsbeispielen näher beschrieben werden.

Es zeigen:
- Fig. 1: perspektivische Darstellung eines Abstandshalters für ein erfindungsgemäβes Stromschienensystem mit einem Abschnitt einer Stromschiene sowie Abschnitten von Abdeckelementen
- Fig. 2: perspektivische Darstellung eines Abstandshalters für ein erfindungsgemäβes Stromschienensystem

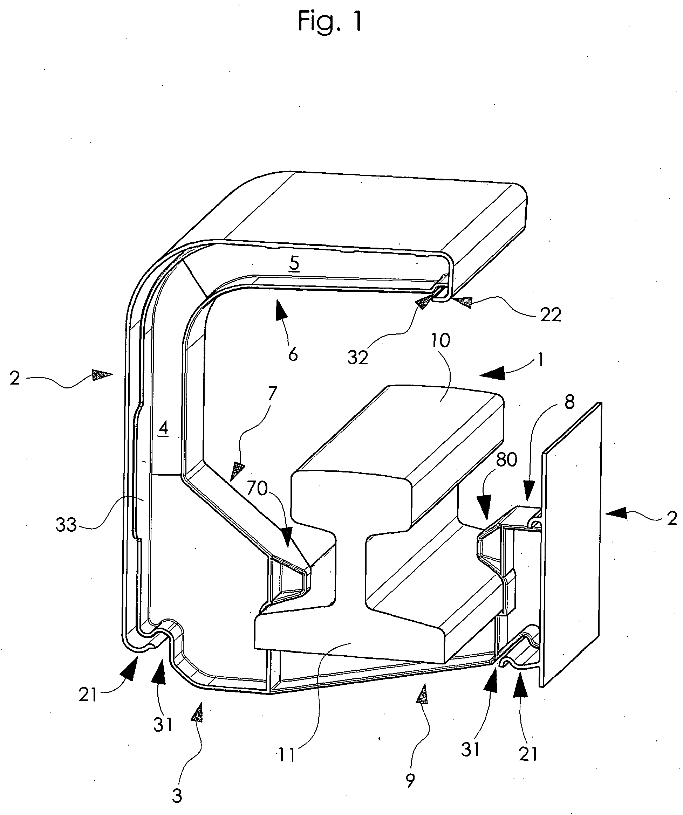

In der Fig. 1 ist eine perspektivische Darstellung eines Abstandshalters 3 für ein erfindungsgemäßes Stromschienensystem umfassend wenigstens eine, eine Stromabnahmefläche 10 aufweisenden, Abschnitt einer Stromschiene 1 sowie Abschnitten von Abdeckelementen 2 dargestellt.
Der Abstandshalter 3 ist durch zwei über eine Traverse 9 verbundene Trägerelemente 7, 8 gebildet.
Der Abstandshalter 3 weist weiterhin ein Rastelement 31, 32 auf, welches mit einem Klemmelement 21, 22 eines Abdeckelementes 2, diese verbindend, in Wirkverbindung steht. In diesem Ausführungsbeispiel ist der Abstandshalter 3 so ausgebildet, dass am Trägerelement 8 ein weiteres Abdeckelement 2 angeordnet ist, welches in etwa dieselbe Höhe aufweist, wie die Stromschiene 1. Das Abdeckelement 2 ist kraftschlüssig über die Klemmelemente 21,22 am Rastelement 31,32 des Abstandshalters 3, diese verbindend in Wirkverbindung stehend.

Der Abstandshalter 3 ist in diesem Ausführungsbeispiel so ausgestaltet, dass das Trägerelement 7 wenigstens ein die Stromabnahmefläche 10 der Stromschiene 1 überdeckendes, von dieser beabstandet angeordnetes, freies Ende 6 aufweist.
Das freie Ende 6 des Trägerelements 7 ist in diesem Ausführungsbeispiel so ausgebildet, dass dessen Abstand von der Stromabnahmefläche 10 der Stromschiene 1 in etwa der Höhe der Stromschiene 1 entspricht. Hierdurch wird vorteilhafterweise ein Raum geschaffen, in dem bei bestimmungsgemäßem Gebrauch des Abstandshalters 3 im erfindungsgemäßen Stromschienensystem ein Stromabnehmer eines Zuges problemlos an die Stromabnahmefläche 10 der Stromschiene 1 gelangt.

Das freie Ende 6 des Trägerelementes 7 des Abstandshalters 3 ist weiterhin so ausgebildet, dass es der Stromabnahmefläche 10 der Stromschiene 1 etwa gegenüberliegend angeordnet ist. Hierdurch wird insbesondere bei bestimmungsgemäßem Gebrauch durch Anordnen der Abdeckelemente 2 erreicht, dass insbesondere die Stromabnahmefläche 10 der Stromschiene 1 aber auch der Raum dazwischen insbesondere vor unautorisierten Eingriffen durch Personen, aber auch vor Witterungseinflüssen geschützt ist. Dies wird insbesondere dadurch realisiert, dass die Klemmelemente 21, 22 des Abdeckelementes 2 mit den Rastelementen 31, 22 des Abstandshalters 3 fixierend in Wirkverbindung stehen.
Das erfindungsgemäße Stromschienensystem besteht im Allgemeinen aus einer mehrere Kilometer Länge aufweisenden Stromschiene 1 sowie ein ebenfalls in der gleichen Längenausdehnung an mehreren, voneinander beabstandet angeordneten Abstandshaltern 3, angeordneten Abdeckelementen 2.
Der Abstandshalter 3 weist in diesem Ausführungsbeispiel ein Trägerelement 7, 8 auf, dass an ihrer der Stromschiene 1 gegenüberliegender Seite wenigstens ein zweites Klemmelement 70, 80 aufweisen. Das zweite Klemmelement 70, 80 des Trägerelementes 7, 8 dient dazu, dass der Abstandshalter 3 auf die Basis 11 der Stromschiene 1 aufrastend anbringbar ist.
Dabei ist der Abstandshalter 3 weiterhin so ausgebildet, dass das freie Ende 6 des Trägerelements 7 ein erstes Trägerteil 4 sowie ein zweites Trägerteil 5 aufweist.
Das erste Trägerteil 4 ist in diesem Ausführungsbeispiel etwa orthogonal zum zweiten Trägerteil 5 des freien Endes 6 des Trägerelements 7 angeordnet. Durch diese vorteilhafte Ausgestaltung des Abstandshalters 3 ist das zweite Trägerteil 5 des freien Endes 6 des Trägerelementes 7 etwa parallel zur Stromabnahmefläche 10 der Stromschiene 1, dieses überdeckend, angeordnet.
Es liegt jedoch auch im Rahmen der Erfindung, dass das freie Ende 6 des Trägerelementes 7 in einem etwa spitzen Winkel am Trägerelement 7 angeordnet ist. In dieser vorteilhaften Ausführungsform des Abstandshalters 3 weist das freie Ende 6 des Trägerelementes 7 nur ein Trägerteil 4 auf.
In diesem Ausführungsbeispiel besteht der Abstandshalter 3 aus einem glasfaserverstärktem Kunststoff.

Der Abstandshalter 3 ist in diesem Ausführungsbeispiel weiterhin so ausgebildet, dass am freien Ende 6 des Trägerelements 7 ein Befestigungselement 33 angeordnet ist, welches mit diesem einstückig verbunden ist.

In der Fig. 1 ist somit ein erfindungsgemäßes Stromschienensystem umfassend wenigstens eine, eine Stromabnahmefläche 10 aufweisende, Stromschiene 1, wenigstens ein Abdeckelement 2 dargestellt, das sich insbesondere dadurch auszeichnet, dass wenigstens ein Trägerelement 7, 8 ein die Stromabnahmefläche 10 der Stromschiene 1 überdeckendes, von dieser beabstandet angeordnetes, freies Ende 6 aufweist.

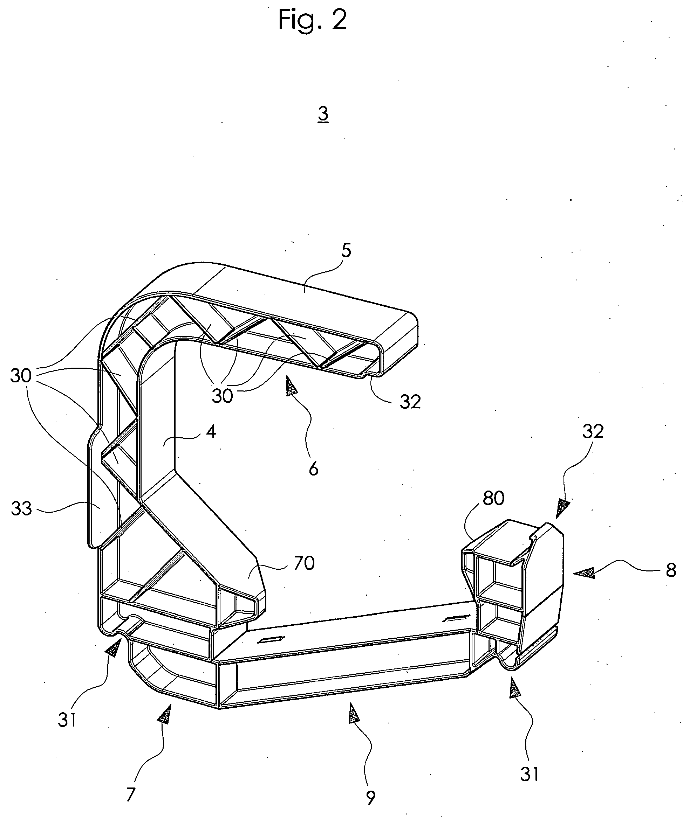

In der Fig. 2 ist eine perspektivische Darstellung eines Abstandshalters 3 für ein erfindungsgemäßes Stromschienensystem dargestellt.
Der Abstandshalter 3 ist durch zwei über die Traverse 9 verbundene Trägerelement 7, 8 gebildet und weist die Rastelemente 31, 32 auf.
Das Rastelement 32 ist in diesem Ausführungsbeispiel am freien Ende 6 des Trägerelements 7 angeordnet. Das freie Ende 6 des Trägerelements 7 weist in diesem Ausführüngsbeispiel ein erstes Trägerteil 4 sowie ein zweites Trägerteil 5 auf, die etwa orthogonal zueinander angeordnet sind.
Das zweite Trägerteil 5 des freien Endes 6 des Trägerelements 7 ist in diesem Ausführungsbeispiel etwa parallel zur Traverse 9 angeordnet.
Die Traverse 9 und das Trägerelement 7, 8 sind in diesem Ausführungsbeispiel einstückig miteinander verbunden, wobei die Traverse 9, das Trägerelement 7, 8, das erste Trägerteil 4, das zweite Trägerteil 5 im Querschnitt etwa Doppel-T-förmig ausgebildet sind.

Zur weiteren Optimierung des Abstandshalters 3 ist dieser in diesem Ausführungsbeispiel so ausgebildet, dass insbesondere das erste Trägerteil 4 sowie das zweite Trägerteil 5 des freien Endes 6 Verstärkungselemente 30 aufweisen.
Durch die im Querschnitt etwa Doppel-T-förmige Geometrie sind die Verstärkungselemente 30 einstückig, in etwa einem spitzen Winkel von 45° zueinander angeordnet, so dass bei bestimmungsgemäßem Gebrauch des Abstandshalters 3 die das Trägerelement 7 sowie das freie Ende 6 des Abstandshalters 3 überdeckende Abdeckung 2 so sicher und stabil fixiert ist, dass der Abstandshalter 3 bei seiner Montage an der Stromschiene 1 jeweils über größere Entfernungen voneinander positionierbar ist, ohne das die Stabilität bzw. die Festigkeit der die Stromschiene überdeckenden Abdeckelemente 2, insbesondere die das freie Ende 6 des Abstandshalters 3 umfassende Abdeckung 2, beeinträchtigt ist.

Das Trägerelement 7, 8 weist in diesem Ausführungsbeispiel ein zweites Klemmelement 70, 80 auf, wobei das Trägerelement 7 mit dem zweiten Klemmelement 70 in etwa einem spitzen Winkel gegenüber dem Trägerelement 8 mit dem zweiten Klemmelement 80 angeordnet und über die Traverse 9 einstückig verbunden ist.
Der Abstandshalter 3 stellt somit ein einfach dimensionierbares Formteil dar, welches sich beispielsweise aus polymerem Material wie im an sich bekannten Spritzgießverfahren oder auch aus duromerem Material im Pressverfahren bzw. im Spritzgießverfahren kostengünstig und wirtschaftlich herstellen lässt. In diesem Ausführungsbeispiel besteht der Abstandshalter 3 aus Acrylnitril-Butadien-Styrol-Copolymere (ABS).
Der Abstandshalter 3 lässt sich somit sehr einfach auf die in der Fig. 1 dargestellte Stromschiene 1 montieren, in dem die Traverse 9 unter der Basis 11 der Stromschiene 1 angesetzt und der Abstandshalter 3 über die Basis 11 der Stromschiene geschoben wird, solange bis die zweiten Klemmelemente 70, 80 des Trägerelementes 7, 8 an der Basis 11 der Stromschiene 1 fixiert sind.
Durch die vorteilhafte Ausgestaltung des freien Endes 6 des Trägerelements 7, insbesondere die orthogonale Anordnung des ersten Trägerteils 4 zum zweiten Trägerteil 5 ist es einerseits möglich, diesen einfach und werkzeuglos an der Stromschiene 1 zu fixieren sowie über die daran angeordneten Abdeckelemente 2 zu schützen.

Ein weiterer Vorteil des erfindungsgemäßen Stromschienensystems wird darin gesehen, dass bei der Herstellung aus einem polymeren Material sowohl des Abstandshalters 3 als auch der Abdeckelemente 2 eine bessere Isolation der stromführenden Stromschiene 1 realisierbar ist, ohne das zusätzliche metallische Teile im Bereich der Stromschiene 1 eingesetzt werden müssen.

## Patentansprüche

1. Stromschienensystem umfassend wenigstens eine, eine Stromabnahmefläche (10) aufweisende, Stromschiene (1), wenigstens ein Abdeckelement (2), sowie wenigstens ein Abstandshalter (3), wobei der Abstandshalter (3) durch wenigstens zwei über eine Traverse (9) verbundene Trägerelemente (7, 8) gebildet ist, wobei der Abstandhalter (3) wenigstens ein Rastelement (31, 32) aufweist, welches mit einem Klemmelement (21, 22) des Abdeckelements (2), diese verbindend, in Wirkverbindung steht, **dadurch gekennzeichnet, dass** wenigstens ein Trägerelement (7, 8) ein die Stromabnahmefläche (10) der Stromschiene (1) überdeckendes, von dieser beabstandet, angeordnetes freies Ende (6) aufweist und dass das freie Ende (6) des Trägerelementes (7, 8) der Stromabnahmefläche (10) der Stromschiene (1) gegenüberliegend angeordnet ist.

2. Stromschienensystem nach Anspruch 1, **dadurch gekennzeichnet, dass** der Abstand des freien Endes (6) des Trägerelementes (7, 8) von der Stromabnahmefläche (10) in etwa der Höhe der Stromschiene (1) entspricht.

3. Stromschienensystem nach einem der vorhergehenden Ansprüche, **dadurch gekennzeichnet, dass** das Trägerelement (7, 8) an seiner der Stromschiene (1) gegenüberliegenden Seite wenigstens ein zweites Klemmelement (70, 80) aufweist.

4. Stromschienensystem nach einem der vorhergehenden Ansprüche, **dadurch gekennzeichnet, dass** das freie Ende (6) des Trägerelementes (7, 8) dem zweiten Klemmelement (70, 80) gegenüberliegend angeordnet ist.

5. Stromschienensystem nach einem der vorhergehenden Ansprüche, **dadurch gekennzeichnet, dass** das freie Ende (6) des Trägerelementes (7, 8) wenigstens ein erstes Trägerteil (4) sowie ein zweites Trägerteil (5) aufweist.

6. Stromschienensystem nach Anspruch 5, **dadurch gekennzeichnet, dass** das erste Trägerteil (4) etwa orthogonal zum zweiten Trägerteil (5) des freien Endes (6) des Trägerelementes (7, 8) angeordnet ist.

7. Stromschienensystem nach Anspruch 6, **dadurch gekennzeichnet, dass** das zweite Trägerteil (5) des freien Endes (6) des Trägerelementes (7, 8) etwa parallel zur Stromabnahmefläche (10) der Stromschiene (1) angeordnet ist.

8. Stromschienensystem nach einem der vorhergehenden Ansprüche, **dadurch gekennzeichnet, dass** die Traverse (9) und / oder das Trägerelement (7, 8) und / oder das erste Trägerteil (4) und / oder das zweite Trägerteil (5) des freien Endes (6) des Trägerelementes (7, 8) im Querschnitt etwa Doppel-T-förmig ausgebildet ist.

9. Stromschienensystem nach einem der vorhergehenden Ansprüche, **dadurch gekennzeichnet, dass** die Traverse (9) und / oder das Trägerelement (7, 8) und / oder das erste Trägerteil (4) und / oder das zweite Trägerteil (5) des freien Endes (6) des Trägerelementes (7, 8) wenigstens ein Verstärkungselement (30) aufweist.

10. Stromschienensystem nach einem der vorhergehenden Ansprüche, **dadurch gekennzeichnet, dass** die Traverse (9) und das Trägerelement (7, 8) einstückig miteinander verbunden sind.

11. Stromschienensystem nach einem der vorhergehenden Ansprüche, **dadurch gekennzeichnet, dass** das erste Trägerteil (4) des freien Endes (6) in etwa rechtwinklig am Trägerelement (7, 8) angeordnet ist.

12. Stromschienensystem nach einem der vorhergehenden Ansprüche, **dadurch gekennzeichnet, dass** das erste Trägerteil (4) des freien Endes (6) in etwa einem spitzen Winkel am Trägerelement (7, 8) angeordnet ist.

13. Stromschienensystem nach einem der vorhergehenden Ansprüche, **dadurch gekennzeichnet, dass** die Trägerelemente (7, 8) einander in einem spitzen Winkel gegenüberliegend angeordnet sind.

## Claims

1. Conductor rail system comprising at least one conductor rail (1), having a current collecting surface (10), comprising at least one covering element (2), and comprising at least one spacer (3), the spacer (3) being formed by at least two support elements (7, 8) connected by way of a cross member (9), the spacer (3) having at least one locking element (31, 32), which is in operative connection with a clamping element (21, 22) of the covering element (2), connecting these, **characterized in that** at least one support element (7, 8) has a free end (6), which is arranged so as to cover the current collecting surface (10) of the conductor rail (1), while being kept at a distance from it, and **in that** the free end (6) of the support element (7, 8) is arranged lying opposite the current collecting surface (10) of the conductor rail (1).

2. Conductor rail system according to Claim 1, **characterized in that** the distance of the free end (6) of the support element (7, 8) from the current collecting surface (10) corresponds approximately to the height of the conductor rail (1).

3. Conductor rail system according to one of the preceding claims, **characterized in that** the support element (7, 8) has on its side lying opposite the conductor rail (1) at least one second clamping element (70, 80).

4. Conductor rail system according to one of the preceding claims, **characterized in that** the free end (6) of the support element (7, 8) is arranged lying opposite the second clamping element (70, 80).

5. Conductor rail system according to one of the preceding claims, **characterized in that** the free end (6) of the support element (7, 8) has at least one first support part (4) and also a second support part (5).

6. Conductor rail system according to Claim 5, **characterized in that** the first support part (4) is arranged approximately orthogonally in relation to the second support part (5) of the free end (6) of the support element (7, 8).

7. Conductor rail system according to Claim 6, **characterized in that** the second support part (5) of the free end (6) of the support element (7, 8) is arranged approximately parallel to the current collecting surface (10) of the conductor rail (1).

8. Conductor rail system according to one of the preceding claims, **characterized in that** the cross member (9) and/or the support element (7, 8) and/or the first support part (4) and/or the second support part (5) of the free end (6) of the support element (7, 8) is formed in cross section in an approximately double-T-shaped manner.

9. Conductor rail system according to one of the preceding claims, **characterized in that** the cross member (9) and/or the support element (7, 8) and/or the first support part (4) and/or the second support part (5) of the free end (6) of the support element (7, 8) has at least one reinforcing element (30).

10. Conductor rail system according to one of the preceding claims, **characterized in that** the cross member (9) and the support element (7, 8) are integrally connected to one another.

11. Conductor rail system according to one of the preceding claims, **characterized in that** the first support part (4) of the free end (6) is arranged approximately at right angles on the support element (7, 8).

12. Conductor rail system according to one of the preceding claims, **characterized in that** the first support part (4) of the free end (6) is arranged approximately at an acute angle on the support element (7, 8).

13. Conductor rail system according to one of the preceding claims, **characterized in that** the support elements (7, 8) are arranged lying opposite one another at an acute angle.

## Revendications

1. Système de barres conductrices comprenant au moins une barre conductrice (1) présentant une surface de prise de courant (10), au moins un élément de recouvrement (2) ainsi qu'au moins un élément d'espacement (3), l'élément d'espacement (3) étant formé par au moins deux éléments de support (7, 8) connectés par le biais d'une traverse (9), l'élément d'espacement (3) présentant au moins un élément d'encliquetage (31, 32) qui est en liaison fonctionnelle avec un élément de serrage (21, 22) de l'élément de recouvrement (2) en reliant ceux-ci, **caractérisé en ce qu'**au moins un élément de support (7, 8) présente une extrémité libre (6) recouvrant la surface de prise de courant (10) de la barre conductrice (1) et disposée à distance de celle-ci, et **en ce que** l'extrémité libre (6) de l'élément de support (7, 8) de la surface de prise de courant (10) est disposée en regard de la barre conductrice (1).

2. Système de barres conductrices selon la revendication 1, **caractérisé en ce que** la distance de l'extrémité libre (6) de l'élément de support (7, 8) à la surface de prise de courant (10) correspond approximativement à la hauteur de la barre conductrice (1).

3. Système de barres conductrices selon l'une quelconque des revendications précédentes, **caractérisé en ce que** l'élément de support (7, 8) présente au niveau de son côté opposé à la barre conductrice (1) au moins un deuxième élément de serrage (70, 80).

4. Système de barres conductrices selon l'une quelconque des revendications précédentes, **caractérisé en ce que** l'extrémité libre (6) de l'élément de support (7, 8) est disposée en face du deuxième élément de serrage (70, 80).

5. Système de barres conductrices selon l'une quelconque des revendications précédentes, **caractérisé en ce que** l'extrémité libre (6) de l'élément de support (7, 8) présente au moins une première partie de support (4) ainsi qu'une deuxième partie de support (5).

6. Système de barres conductrices selon la revendication 5, **caractérisé en ce que** la première partie de support (4) est disposée approximativement perpendiculairement à la deuxième partie de support (5) de l'extrémité libre (6) de l'élément de support (7, 8).

7. Système de barres conductrices selon la revendication 6, **caractérisé en ce que** la deuxième partie de support (5) de l'extrémité libre (6) de l'élément de support (7, 8) est disposée approximativement parallèlement à la surface de prise de courant (10) de la barre conductrice (1).

8. Système de barres conductrices selon l'une quelconque des revendications précédentes, **caractérisé en ce que** la traverse (9) et/ou l'élément de support (7, 8) et/ou la première partie de support (4) et/ou la deuxième partie de support (5) de l'extrémité libre (6) de l'élément de support (7, 8) sont réalisés en section transversale approximativement en forme de double T.

9. Système de barres conductrices selon l'une quelconque des revendications précédentes, **caractérisé en ce que** la traverse (9) et/ou l'élément de support (7, 8) et/ou la première partie de support (4) et/ou la deuxième partie de support (5) de l'extrémité libre (6) de l'élément de support (7, 8) présentent au moins un élément de renforcement (30).

10. Système de barres conductrices selon l'une quelconque des revendications précédentes, **caractérisé en ce que** la traverse (9) et l'élément de support (7, 8) sont connectés l'un à l'autre d'une seule pièce.

11. Système de barres conductrices selon l'une quelconque des revendications précédentes, **caractérisé en ce que** la première partie de support (4) de l'extrémité libre (6) est disposée approximativement perpendiculairement sur l'élément de support (7, 8).

12. Système de barres conductrices selon l'une quelconque des revendications précédentes, **caractérisé en ce que** la première partie de support (4) de l'extrémité libre (6) est disposée approximativement à angle aigu sur l'élément de support (7, 8).

13. Système de barres conductrices selon l'une quelconque des revendications précédentes, **caractérisé en ce que** les éléments de support (7, 8) sont disposés l'un en face de l'autre suivant un angle aigu.
